# EUROPÄISCHE PATENTSCHRIFT

(11) **EP 1 199 322 B1**
(45) Veröffentlichungstag und Bekanntmachung des Hinweises auf die Patenterteilung: **22.09.2004**
(21) Anmeldenummer: 01123347.5
(22) Anmeldetag: 09.10.2001
(51) Int. Cl.: C08G 18/42, C08G 18/81, C09D 175/06

(54) **Zweikomponentensysteme auf Basis von wasserlöslichen Polyestern und verkappten Isocyanaten zur Formulierung von wasserverdünnbaren Einbrennlacken**
Two component systems based on water soluble polyester and blocked isocyanates for the formulation of aqueous stoving enamels
Système à deux composants à base de polyester diluable par l'eau et isocyanates blocqués pour la formulation de vernis à cuire aqueux

(30) Priorität: 17.10.2000 AT 17812000
(43) Veröffentlichungstag der Anmeldung: 24.04.2002
(73) Patentinhaber: Surface Specialties Austria GmbH, 8402 Werndorf (AT)
(72) Erfinder: Dworak, Gert, Dr., 8010 Graz (AT); Feola, Roland, Dr., 8045 Graz (AT); Gmoser, Johann, 8045 Graz (AT); Kuttler, Ulrike, Dr., 8302 Vasoldsberg (AT); Staritzbichler, Werner Dr., 8046 Graz (AT)
(74) Vertreter: Deckers, Hellmuth, Dr.

(56) Entgegenhaltungen:
- EP-A- 0 022 452
- FR-A- 2 211 518
- NL-A- 7 600 387

## Beschreibung

Die Erfindung betrifft Zweikomponentensysteme enthaltend wasserlösliche Polyester und verkappte Isocyanate, die als Bindemittel für wäßrige Einbrennlacke geeignet sind.

Einbrennlacke enthalten als Bindemittel reaktive Harze und Härter, die erst beim Einbrennen, also höheren Temperaturen, mit den reaktiven Gruppen der Harze unter Bildung von vernetzten Strukturen reagieren. Wäßrige Einbrenn-Bindemittel sind beispielsweise aus der EP-A 0 218 906 bekannt, in der Kombinationen von Copolymerisaten aus radikalisch polymerisierbaren Monomeren und Vernetzerharzen wie Aminoplasten, Phenoplasten oder blockierten Isocyanaten beschrieben werden. Als Blockierungsmittel für die Isocyanate werden aliphatische und aromatische Monoalkohole wie Methanol, Äthanol, Butanol, (Cyclo-)Hexanol und Benzylalkohol, Oxime, Lactame und Phenole genannt. Das Bindemittel ist eine wasserverdünnbare Mischung aus Massenanteilen von 60 bis 95 % des Copolymerisats und 40 bis 5 % des Vernetzers. Durch Zugabe von Pigmenten können auch pigmentierte Lacke mit hoher Lagerstabilität hergestellt werden. Die Blockierung der Isocyanate ist so effizient, daß die Vernetzungsreaktion in der Mischung bei üblicher (Raum)-Temperatur nicht mit merklicher Geschwindigkeit abläuft.

Aus der EP-A 0 496 210 sind Zweikomponentensysteme zur Herstellung von Einbrennbeschichtungen bekannt, die wäßrig/organische Lösungen von anionisch modifizierten Polyacrylatharzen und organische Polyisocyanate enthalten, die nicht blockiert sind und daher keine Blockierungsmittel bei der Aushärtung abspalten.

Bestimmte wäßrige, Sulfonat- und Hydroxylgruppen enthaltende Polyesterharze können gemäß der EP-A 0 537 568 zu wäßrigen Zweikomponenten-Bindemitteln formuliert werden, wobei als Härter mehrfunktionelle Isocyanate mit freien Isocyanatgruppen eingesetzt werden. Wasserverdünnbare Lacke in Form von Zweikomponentensystemen auf Basis von wasserlöslichen Polyestern oder anderen wasserlöslichen Harzen und unblockierten Isocyanaten in Kombination mit wasserlöslichen oder wasserdispergierbaren teilverätherten Aminoplastharzen sind aus der österreichischen Patentanmeldung A-2173/99 bekannt.

Bei der Verwendung von unblockierten Isocyanaten ergibt sich jedoch eine Reihe von Nachteilen. So tritt das Lösungsmittel Wasser im Lack innerhalb der Verarbeitungszeit immer in Konkurrenz zu den OH-Gruppen des Harzes um die Reaktion mit den unblockierten Isocyanatgruppen. Dieses Verhalten kann einerseits zur Bildung von unerwünschten Nebenprodukten führen (durch Reaktion von Wasser und Isocyanat im wesentlichen von Aminen und in weiterer Folge von Harnstoffen), andererseits kommt es durch die Bildung von Kohlendioxid bei der Zersetzung der Isocyanate durch die Einwirkung von Wasser zum Auftreten von Gasblasen, die im eingebrannten Lackfilm oft zu Filmstörungen führen. Die gebildeten Nebenprodukte (Amine, Harnstoffe) können auch noch zusätzlich die Eigenschaften des eingebrannten Lackfilmes verschlechtern.

Die Verluste an Isocyanatgruppen durch Nebenreaktionen werden üblicherweise durch Einsatz von oft erheblichen stöchiometrischen Überschüssen der Isocyanate kompensiert. Dies ist ökonomisch unerwünscht. Das Verarbeiten von unblockierten Isocyanaten im Zweikomponentenverfahren ist weiters auch ein arbeitshygienisches (toxikologisches) Problem.

In der Praxis werden in Zweikomponentensystemen meist unblockierte mehrfunktionelle aliphatische Isocyanate eingesetzt. Unblockierte aromatische Isocyanate reagieren in der Regel mit dem Wasser so rasch, daß eine Verarbeitung innerhalb der benötigten Verarbeitungszeit nicht möglich ist. Aromatische, unblockierte Isocyanate werden daher für eine 2K-Anwendung üblicherweise nicht eingesetzt.

Es wurde gefunden, daß aliphatische, aber auch aromatische, mehrfunktionelle Isocyanate dennoch in Zweikomponenten-Systemen verwendet werden können, wenn diese mit Blockierungsmitteln verkappt werden, die zu ,sehr reaktiven, schon bei vergleichsweise niedrigen Einbrenntemperaturen entkappenden Umsetzungsprodukten führen. Die derartig blockierten Isocyanate können so reaktiv sein, daß eine Formulierung mit wasserlöslichen Hydroxylgruppen-haltigen Harzen (z. B. Polyestern) als Einkomponenten-Systeme aus Gründen der Hydrolysestabilität nicht mehr möglich ist. Die Aushärtung von Zweikomponenten-Lacken, die diese Isocyanate enthalten, zu vernetzten Filmen ist dafür bei umso niedrigeren Einbrenntemperaturen möglich. Besonders bewährt haben sich als Verkappungsmittel stark aktivierte C-H acide Verbindungen, bestimmte reaktive Alkohole sowie bestimmte Oxime, wie weiter unten erläutert. Ähnliche Addukte mit aliphatischen Isocyanaten sind beispielsweise beschrieben in Houben-Weyl, Methoden der Organischen Chemie, Bd. XIV/2, Makromolekulare Stoffe, 4.Aufl. 1963, Seite 62 und 63.

Die vorliegende Erfindung betrifft daher wäßrige Zweikomponenten-Bindemittel, deren erste Komponente einen wasserverdünnbaren Polyester **AB** mit einer Hydroxylzahl von mindestens 10 mg/g enthält, und deren zweite Komponente ein blockiertes mehrfunktionelles Isocyanat **C** enthält, dadurch gekennzeichnet, daß das blockierte Isocyanat **C** durch Reaktion aus einem aromatischen Isocyanat **C1** und einem Blockierungsmittel **C2** für das Isocyanat hergestellt wird, wobei **C2** ausgewählt ist aus primären Alkoholen **C21** mit 3 bis 10 Kohlenstoffatomen, bei denen das der Hydroxymethylengruppe benachbarte Kohlenstoffatom eine Doppelbindung trägt, Oximen **C22** von linearen, verzweigten oder cyclischen aliphatischen Ketonen mit 3 bis 15 Kohlenstoffatomen, CH-aciden Verbindungen **C23**, bei denen das den aktiven Wasserstoff tragende C-Atom mindestens eine weitere Gruppe ausgewählt aus R¹-CO-, R²-O-CO-, -NO₂ und R³-SO₂- trägt, wobei R¹, R² und R³ unabhängig voneinander lineare, verzweigte oder cyclische Alkylgruppen mit 1 bis 18 Kohlenstoffatomen oder Arylgruppen mit 5 bis 15 Kohlenstoffatomen sein können, und NH-aciden Verbindungen **C24** wie beispielsweise 3,5-Dimethylpyrazol, Succinimid oder Phthalimid. Geeignete Blockierungsmittel **C21** sind beispielsweise Hydroxyaceton, Allylalkohol, 2-Methylallylalkohol (β-Methallylalkohol), 3-Methyl-2-buten-1-ol, 2-Penten-1-ol und 2-Hexen-1-ol. Geeignete Blockierungsmittel **C22** sind beispielsweise die Oxime von Aceton, 2-Butanon, 2- und 3-Pentanon und Methylisobutylketon. Geeignete Blockierungsmittel **C23** sind insbesondere Acetylaceton, Acetessigester, Malonsäureester und Cyanessigsäureester.

Die wasserverdünnbaren Polyester **AB** können entweder in bekannter Weise durch Polykondensation von mehrfunktionellen, insbesondere difunktionellen organischen Hydroxyverbindungen **AB1** und mehrfunktionellen, insbesondere difunktionellen organischen Säuren **AB2** hergestellt werden, oder sie lassen sich durch partielle Kondensation von für sich allein wasserunlöslichen Hydroxylgruppen-haltigen Verbindungen **B** mit Säuregruppen, insbesondere Carboxylgruppen enthaltenden organischen Verbindungen **A** darstellen. Die Verbindungen **A** sind für sich allein nach zumindest teilweiser Neutralisation der Säuregruppen in Wasser löslich bzw. in Wasser dispergierbar. Partielle Kondensation bedeutet hier, daß die Umsetzung der Verbindungen **A** und **B** soweit durchgeführt wird, daß das erhaltene Kondensationsprodukt **AB** noch sowohl Hydroxylgruppen als auch Säuregruppen aufweist. Die Menge der Säuregruppen in **AB** entspricht dabei bevorzugt einer Säurezahl von ca. 10 bis 60 mg/g, bevorzugt 15 bis 55, und insbesondere 20 bis 50 mg/g. Die Menge der Hydroxylgruppen in **AB** entspricht einer Hydroxylzahl von mindestens 10 mg/g, bevorzugt 15 bis 200 mg/g und insbesondere 25 bis 150 mg/g. Das Polykondensat **AB** weist üblicherweise einen Staudinger-Index *J*₀ von 5 bis 25 cm³/g auf, bevorzugt 7 bis 22 und insbesondere 10 bis 20 cm³/g, gemessen in Dimethylformamid bei 20 °C.

Als "wasserlöslich" wird hier ein Stoff bezeichnet, der im Kontakt mit der zehnfachen Masse an Wasser bei Raumtemperatur (20 °C) in einem solchen Ausmaß in der wäßrigen Phase gelöst wird, daß der Massenanteil dieses Stoffs in der wäßrigen Phase nach Erreichen des Gleichgewichts nicht weniger als 1 % beträgt. Als "in Wasser dispergierbar" wird ein Stoff bezeichnet, der mit der zehnfachen Masse an Wasser unter Scherung eine Dispersion bildet, die beim Lagern bei Raumtemperatur innerhalb von 14 Tagen keine makroskopische Entmischung zeigt. Als "wasserverdünnbar" werden solche Stoffe bezeichnet, die wasserlöslich und/oder in Wasser dispergierbar sind.

Die Verbindungen oder Harze A mit Carboxylgruppen werden bevorzugt ausgewählt aus Polyesterharzen **A1**, Polyurethanharzen **A2**, den sogenannten Maleinatölen **A3**, mit ungesättigten Carbonsäuren gepfropften Fettsäuren und Fettsäuregemischen **A4** sowie den Acrylatharzen **A5**. Anstelle von Harzen mit Carboxylgruppen oder im Gemisch mit diesen lassen sich auch mit Phosphorsäure bzw. Phosphonsäuren modifizierte Epoxidharze oder derart modifizierte Umsetzungsprodukte von Epoxidharzen mit Fettsäuren einsetzen, gemeinsam als **A6** bezeichnet. Bevorzugt ist die Säurezahl der Harze **A** 100 bis 230 mg/g, insbesondere von 70 bis 160 mg/g. Ihr Staudinger-Index, gemessen in Dimethylformamid als Lösungsmittel bei 20 °C, beträgt im allgemeinen ca. 6,5 bis 12 cm³/g, bevorzugt 8 bis 11 cm³/g.

Geeignete Polyesterharze **A1** lassen sich in bekannter Weise herstellen aus Polyolen **A11** und Polycarbonsäuren **A12**, wobei ein Teil, bevorzugt bis zu 25 %, der Stoffmenge der Polyole und Polycarbonsäuren auch durch Hydroxycarbonsäuren **A13** ersetzt sein kann. Durch geeignete Wahl von Art und Menge der Edukte **A11** und **A12** wird sichergestellt, daß der resultierende Polyester eine ausreichende Zahl von Säuregruppen, entsprechend der oben angegebenen Säurezahl, hat. Die Polyole **A11** werden bevorzugt ausgewählt aus den aliphatischen und cycloaliphatischen Alkoholen mit 2 bis 10 Kohlenstoffatomen und im Mittel mindestens zwei Hydroxylgruppen pro Molekül, insbesondere geeignet sind Glykol, 1,2- und 1,3-Propandiol, 1,4-Butandiol, 1,6-Hexandiol, Neopentylglykol, Di- und Triäthylenglykol, Di- und Tripropylenglykol, Glycerin, Trimethylolpropan und Trimethyloläthan. Geeignete Polycarbonsäuren **A12** sind aliphatische, cycloaliphatische und aromatische Polycarbonsäuren wie Adipinsäure, Bernsteinsäure, Cyclohexandicarbonsäure, Phthalsäure, Iso- und Terephthalsäure, Trimellithsäure, Trimesinsäure und Benzophenontetracarbonsäure. Dabei lassen sich auch Verbindungen einsetzen, die sowohl Carbonsäure- als auch Sulfonsäuregruppen aufweisen, wie zum Beispiel Sulfoisophthalsäure.

Geeignete Polyurethanharze **A2** lassen sich darstellen durch Umsetzung von aliphatischen Polyolen **A21** wie unter **A11** definiert, Hydroxyalkancarbonsäuren **A22** mit mindestens einer, bevorzugt zwei, Hydroxylgruppen und einer unter Veresterungsbedingungen im Vergleich zu Adipinsäure weniger reaktiven Carboxylgruppe, bevorzugt eingesetzt werden Dihydroxymonocarbonsäuren ausgewählt aus Dimethylolessigsäure, Dimethylolbuttersäure und Dimethylolpropionsäure, oligomeren oder polymeren Verbindungen **A25** mit im Mittel mindestens zwei Hydroxylgruppen pro Molekül, die ausgewählt werden können aus Polyätherpolyolen **A251**, Polyesterpolyolen **A252**, Polycarbonatpolyolen **A253**, gesättigten und ungesättigten Dihydroxyaliphaten **A254**, die durch Oligomerisieren oder Polymerisieren von Dienen mit 4 bis 12 Kohlenstoffatomen, insbesondere Butadien, Isopren und Dimethylbutadien und anschließendes Funktionalisieren in bekannter Weise erhältlich sind, sowie mehrfunktionellen Isocyanaten **A23**, bevorzugt ausgewählt aus aromatischen, cycloaliphatischen sowie linearen und verzweigten aliphatischen difunktionellen Isocyanaten wie Toluylendiisocyanat, Bis(4-isocyanatophenyl)methan, Tetramethylxylylendiisocyanat, Isophorondiisocyanat, Bis(4-isocyanatocyclohexyl)methan, Hexamethylendiisocyanat und 1,6-Diisocyanato-3,3,5- und -3,5,5-trimethylhexan.

Besonders bevorzugt werden solche Polyurethanharze **A2**, die durch Umsetzung einer Mischung von einem oder mehreren Polyolen **A21** mit einer Hydroxyalkancarbonsäure **A22** und mindestens einem mehrfunktionellen Isocyanat **A23**, das mit Monohydroxyverbindungen A24 ausgewählt aus Polyalkylenglykol-Monoalkyläthern HO-(R¹-O)ₙ-R², wobei R¹ ein linearer oder verzweigter Alkylenrest mit 2 bis 6, bevorzugt 2 bis 4 Kohlenstoffatomen ist, und R² eine Alkylgruppe mit 1 bis 8, bevorzugt 2 bis 6 Kohlenstoffatomen ist, und n eine Zahl zwischen 2 und 10 ist und Oximen von aliphatischen Ketonen mit 3 bis 9 Kohlenstoffatomen zumindest teilweise, üblicherweise zu mehr als 20 %, bevorzugt zu mehr als 35 %, und insbesondere zu 50 % und mehr blockiert ist. Der Blockierungsgrad wird hier angegeben als Anteil der blockierten Isocyanatgruppen, bezogen auf die in dem Isocyanat **A23** insgesamt vorhandenen (blockierten und unblockierten) Isocyanatgruppen. Es ist weiter bevorzugt, die Polyurethanharze **A21** derart herzustellen, daß eine Mischung eines mehrfunktionellen Isocyanats und eines auf die oben beschriebene Weise blockierten mehrfunktionellen Isocyanats mit der Hydroxyalkancarbonsäure **A22** und den Polyolen **A21** und **A25** umgesetzt werden, wobei die Mischungsverhältnisse so gewählt werden, daß in jedem Molekül des Polyurethans **A21** im Mittel eine oder mehr als eine endständige blockierte Isocyanatgruppe vorliegt.

Als "Maleinatöl" **A3** werden Umsetzungsprodukte von (trocknenden) Ölen **A31** und olefinisch ungesättigten Carbonsäuren **A32**, besonders Dicarbonsäuren bezeichnet. Als Öle **A31** werden bevorzugt trocknende und halbtrocknende Öle wie Leinöl, Tallöl, Rapsöl, Sonnenblumenöl und Baumwollsaatöl eingesetzt, mit Jodzahlen von ca. 100 bis ca. 180 cg/g. Die ungesättigten Carbonsäuren **A32** werden so ausgewählt, daß sie unter den üblichen Bedingungen radikalisch (nach Zusatz von Initiatoren oder nach Erwärmen) auf die vorgelegten Öle mit einer Ausbeute (Anteil der nach der Reaktion mit dem Öl verbundenen ungesättigten Carbonsäuren, bezogen auf die zur Reaktion eingesetzte Menge) von über 50 % pfropfen. Besonders geeignet ist Maleinsäure in Form ihres Anhydrids, ferner Tetrahydrophthalsäureanhydrid, Acryl- und Methacrylsäure, sowie Citracon-, Mesacon- und Itaconsäure.

Ebenfalls geeignete Harze **A4** sind mit den unter **A32** genannten ungesättigten Säuren gepfropfte Fettsäuren oder Fettsäuregemische **A41**, wobei die letzteren durch Verseifen von Fetten in technischen Mengen zugänglich sind. Die geeigneten Fettsäuren weisen mindestens eine olefinische Doppelbindung im Molekül auf, beispielhaft werden Ölsäure, Linol- und Linolensäure, Ricinolsäure und Elaidinsäure sowie die genannten technischen Gemische solcher Säuren aufgezählt.

Weitere geeignete Harze **A5** sind die durch Copolymerisation von olefinisch ungesättigten Carbonsäuren **A51** und anderen Vinyl- oder Acryl-Monomeren **A52** zugänglichen sauren Acrylatharze. Die Carbonsäuren sind die bereits unter **A32** genannten, ebenso noch Vinylessigsäure sowie Croton- und Isocrotonsäure und die Halbester von olefinisch ungesättigten Dicarbonsäuren wie z. B. Monomethylmaleinat und -fumarat. Geeignete Monomere **A52** sind die Alkylester von Acryl- und Methacrylsäure mit bevorzugt 1 bis 8 Kohlenstoffatomen in der Alkylgruppe, (Meth)Acrylnitril, Hydroxyalkyl(meth)acrylate mit 2 bis 6 Kohlenstoffatomen in der Alkylgruppe, Styrol, Vinyltoluol, sowie Vinylester von aliphatischen linearen und verzweigten Carbonsäuren mit 2 bis 15 Kohlenstoffatomen, insbesondere Vinylacetat und der Vinylester eines Gemisches von verzweigten aliphatischen Carbonsäuren mit im Mittel 9 bis 11 Kohlenstoffatomen. Vorteilhaft ist auch die Copolymerisation der unter **A51** und **A52** genannten Monomeren in Gegenwart von solchen Verbindungen **A53**, die mit den ungesättigten Carbonsäuren unter Addition und Bildung einer Carboxyl- oder Hydroxylfunktionellen copolymerisierbaren Verbindung reagieren. Derartige Verbindungen sind beispielsweise Lactone **A531**, die mit den Carbonsäuren **A51** unter Ringöffnung zu einer Carboxyl-funktionellen ungesättigten Verbindung reagieren, und Epoxide **A532**, insbesondere Glycidylester von in α-Stellung verzweigten gesättigten aliphatischen Monocarbonsäuren mit 5 bis 12 Kohlenstoffatomen wie der Neodecansäure oder der Neopentansäure, die unter Addition mit der Säure **A51** zu einer copolymerisierbaren Verbindung mit einer Hydroxylgruppe reagieren. Dabei sind die Stoffmengen der eingesetzten Verbindungen so zu bemessen, daß die geforderte Säurezahl erreicht wird. Legt man diese Verbindung **A53** vor und führt die Polymerisation so durch, daß diese Verbindung als (alleiniges) Lösungsmittel verwendet wird, so erhält man lösungsmittelfreie Acrylatharze.

Die mit Phosphorsäure oder Phosphonsäuren modifizierten Epoxidharze oder mit Phosphorsäure oder Phosphonsäuren modifizierten Addukte von Epoxidharzen und Fettsäuren A6 werden hergestellt durch Umsetzung vorzugsweise in einem Lösungsmittel von Phosphorsäure oder organischen Phosphonsäuren, die mindestens zweibasig sind, mit Epoxidharzen oder Addukten von Epoxidharzen und Fettsäuren. Dabei wird die Stoffmenge der eingesetzten Phosphor- oder Phosphonsäure üblicherweise so bemessen, daß sämtliche Epoxidgruppen durch die Umsetzung mit der Säure verbraucht werden, und daß eine ausreichende Anzahl von Säuregruppen auch nach der Reaktion noch zur Verfügung steht. Das entstandene Harz weist Hydroxylgruppen (aus der Reaktion der Oxirangruppe mit der Säurefunktion) auf, wobei diese Hydroxylgruppen in β-Stellung zur Estergruppierung stehen, sowie Säuregruppen der Phosphor- bzw. Phosphonsäure, die nicht durch die Umsetzung mit dem Epoxid verbraucht wurden. Geeignete Phosphor- bzw. Phosphonsäuren sind insbesondere ortho-Phosphorsäure H₃PO₄, phosphorige Säure H₃PO₃, und Alkanphosphonsäuren mit 1 bis 18, bevorzugt 1 bis 6 Kohlenstoffatomen wie Methan- und Äthanphosphonsäure.

Als Hydroxylgruppen-haltige Verbindungen oder Harze **B** sind insbesondere Polyester **B1**, Acrylatharze **B2**, Polyurethanharze **B3** sowie Epoxidharze **B4** geeignet. Die Hydroxylzahl der Harze **B** beträgt im allgemeinen ca. 50 bis 500 mg/g, vorzugsweise ca. 60 bis 350 mg/g, und besonders bevorzugt 70 bis 300 mg/g. Ihr Staudinger-Index, gemessen bei 20 °C in Dimethylformamid als Lösungsmittel, beträgt bevorzugt 8 bis 13 cm³/g, insbesondere 9,5 bis 12 cm³/g.

Die Polyester **B1** werden wie die Komponente **A1** durch Polykondensation hergestellt; lediglich ist hier Art und Menge der Edukte so zu wählen, daß ein Überschuß an Hydroxylgruppen gegenüber den Säuregruppen besteht, wobei das Kondensationsprodukt die oben angegebene Hydroxylzahl aufweisen muß. Dies kann erreicht werden, indem mehrwertige Alkohole mit im Mittel mindestens zwei, bevorzugt mindestens 2,1 Hydroxylgruppen pro Molekül, mit Dicarbonsäuren oder einem Gemisch von Poly- und Monocarbonsäuren mit im Mittel maximal zwei, bevorzugt 1,5 bis 1,95 Säuregruppen pro Molekül eingesetzt werden. Eine andere Möglichkeit ist, einen entsprechenden Überschuß an Hydroxylkomponenten (Polyolen) **B11** gegenüber den Säuren **B12** einzusetzen. Die Polyole **B11** und die mehrfunktionellen Säuren **B12**, die in der Polykondensationsreaktion zu den Hydroxylgruppen-haltigen Polyestern **B1** umgesetzt werden, werden aus den gleichen Gruppen wie die Polyole **A11** und die-Säuren **A12** ausgewählt. Es ist hier ebenso möglich, einen Teil der Polyole und Säuren durch Hydroxysäuren entsprechend **A13** zu ersetzen. Es wird dabei angestrebt, daß die Säurezahl der Komponente **B** nicht über 20 mg/g, bevorzugt unter 18 mg/g, liegt. Die Säurezahl läßt sich beispielsweise dadurch herabsetzen, daß der fertig kondensierte Polyester **B1** mit einer geringen Menge einwertiger aliphatischer Alkohole **A14** unter Veresterungsbedingungen nachreagiert wird. Dabei ist die Menge an Alkoholen **A14** so zu bemessen, daß zwar die Säurezahl unter den Grenzwert abgesenkt wird, jedoch der Staudinger-Index nicht unter die genannte untere Grenze absinkt. Geeignete aliphatische Alkohole sind beispielsweise n-Hexanol, 2-Äthylhexanol, Isodecylalkohol und Tridecylalkohol.

Die Hydroxylgruppen-haltigen Acrylatharze **B2** sind zugänglich durch üblicherweise radikalisch initiierte Copolymerisation von Hydroxylgruppen-haltigen Acrylmonomeren **B21** mit anderen Vinyl- oder Acrylmonomeren **B22** ohne solche Funktionalität. Beispiele für die Monomeren **B21** sind Ester der Acryl- und Methacrylsäure mit aliphatischen Polyolen, insbesondere Diolen mit 2 bis 10 Kohlenstoffatomen, wie Hydroxyäthyl- und Hydroxypropyl-(meth)acrylat. Beispiele für die Monomeren **B22** sind die Alkylester der (Meth)acrylsäure mit 1 bis 10 Kohlenstoffatomen in der Alkylgruppe wie Methyl-, Äthyl-, n-Butyl- und 2-Äthylhexyl(meth)acrylat, (Meth)Acrylnitril, Styrol, Vinyltoluol, Vinylester von aliphatischen Monocarbonsäuren mit 1 bis 10 Kohlenstoffatomen wie Vinylacetat und Vinylpropionat. Bevorzugt werden auch solche Acrylatharze, die nicht wie üblich in Lösung, sondern in einer Substanzpolymerisation hergestellt werden, wobei eine flüssige cyclische Verbindung vorgelegt wird, die als Lösungsmittel bei der Polymerisationsreaktion fungiert, und die durch Ringöffnung bei der Reaktion mit einem der eingesetzten Monomeren eine copolymerisierbare Verbindung bildet. Beispiele für solche Verbindungen sind Glycidylester von in α-Stellung verzweigten aliphatischen Monocarbonsäuren, insbesondere der als Neopentansäure oder Neodecansäure kommerziell erhältlichen Säuren bzw. Säuregemische, weiter Lactone wie ε-Caprolacton oder δ-Valerolacton. Werden diese Glycidylester eingesetzt, so ist es erforderlich, mindestens einen zur Stoffmenge der Epoxidgruppen äquimolaren Anteil an Säuregruppen-haltigen Comonomeren, wie (Meth)Acrylsäure, bei der Polymerisation einzusetzen. Die Lactone können unter Ringöffnung sowohl mit Hydroxylgruppen-haltigen als auch mit Säuregruppen-haltigen Comonomeren eingesetzt werden.

Hydroxylgruppen-haltige Polyurethanharze **B3** sind in bekannter Weise zugänglich durch Addition von oligomeren oder polymeren Polyolen **B31**, ausgewählt aus Polyesterpolyolen, Polyätherpolyolen, Polycarbonatpolyolen und Polyolefinpolyolen, gegebenenfalls niedermolekularen aliphatischen Diolen oder Polyolen **B33** mit 2 bis 12 Kohlenstoffatomen, wie beispielsweise Äthylenglykol, 1,2-und 1,3-Propylenglykol, 1,4-Butandiol, 1,6-Hexandiol, Diund Tri-Äthylen- bzw. Propylenglykol, Neopentylglykol, Trimethylolpropan, Pentaerythrit, und mehrfunktionellen Isocyanaten **B32**, wobei die letzteren in stöchiometrischem Unterschuß eingesetzt werden, derart daß die Anzahl der Hydroxylgruppen in der Reaktionsmischung größer ist als die der Isocyanatgruppen. Geeignete Polyole sind insbesondere oligomere und polymere Dihydroxyverbindungen mit einer zahlenmittleren molaren Masse Mₙ von ca. 200 bis 10000 g/mol. Durch Polyaddition mit mehrfunktionellen, insbesondere difunktionellen Isocyanaten werden sie bis zu dem angestrebten Wert für den Staudinger-Index von mindestens 8 cm³/g, vorzugsweise mindestens 9,5 cm³/g aufgebaut.

. Epoxidharze **B4**, die durch Reaktion von Epichlorhydrin mit aliphatischen oder aromatischen Diolen oder Polyolen, insbesondere Bisphenol A, Bisphenol F, Resorcin, Novolaken oder oligomeren Polyoxyalkylenglykolen mit 2 bis 4, bevorzugt 3 Kohlenstoffatomen in der Alkylengruppe, zugänglich sind, weisen je eingesetztem Epichlorhydrin-Molekül mindestens eine Hydroxylgruppe auf. Anstelle der Reaktion von Epichlorhydrin mit Diolen lassen sich die geeigneten Epoxidharze auch durch die sogenannte Advancement-Reaktion aus Diglycidyläthern von Diolen (wie den oben genannten) oder Diglycidylestern von zweibasigen organischen Säuren mit den genannten Diolen herstellen. Alle bekannten Epoxidharze lassen sich hier einsetzen, soweit sie der Bedingung für die Hydroxylzahl genügen.

Das blockierte Isocyanat C ist vorzugsweise allein nicht wasserlöslich oder wasserdispergierbar. Es ist herstellbar durch Umsetzen der genannten Blockierungsmittel **C2** mit mehrfunktionellen Isocyanaten C1, die aromatisch sind (d. i. die Isocyanatgruppen sind jeweils an ein aromatisches C-Atom gebunden) und mindestens 2, bevorzugt 2 bis 4 Isocyanatgruppen je Molekül aufweisen. Als Beispiel für die bevorzugten aromatischen mehrfunktionellen Isocyanate sind zu nennen 1,3-Phenylendiisocyanat, 1,4-Phenylendiisocyanat, 2,4-Toluylendiisocyanat (2,4-TDI), 2,6-Toluylendiisocyanat (2,6-TDI) sowie Gemische (TDI) aus diesen Isomeren, 4,4'-Biphenylendiisocyanat, 1,5-Naphthylendiisocyanat, 1,4-Naphthylendiisocyanat, 4,4'-Diisocyanatodiphenyläther und Bis(4-isocyonatophenyl)methan (MDI), die mit mindestens dreiwertigen linearen oder verzweigten aliphatischen Alkoholen weiter zu oligomeren Verbindungen umgesetzt werden können, welche dann bevorzugt 2 bis 4 Isocyanatgruppen je Molekül enthalten. Als mehrwertige Alkohole, die möglichst hydrolysestabile Bindungen ergeben sollen, eignen sich z. B. Glycerin, Trimethylolpropan, Trimethyloläthan, Pentaerythrit, Ditrimethylolpropan und -äthan. Uretdione und Isocyanurate von obigen Diisocyanaten, Allophanate und Biurete abgeleitet von obigen Diisocyanaten und Gemische solcher Di- oder Polyisocyanate können ebenfalls eingesetzt werden. Besonders bevorzugt werden die Diisocyanate, insbesondere TDI, sowie die von diesen abgeleiteten Uretdione, Isocyanurate, Allophanate und Biurete.

In Abhängigkeit von den anwendungstechnischen Anforderungen können anstelle von den hier bevorzugten aromatischen Isocyanaten auch aliphatische wie z.B. Hexamethylendiisocyanat eingesetzt werden - die für eine Härtung erforderlichen Einbrenntemperaturen liegen dann naturgemäß höher.

Die erfindungsgemäßen Zweikomponentensysteme werden unmittelbar vor der Applikation gemischt. Die Topfzeit der Mischungen beträgt über 8 Stunden. Diesen Mischungen können die üblichen in der Lacktechnologie bekannten Zusätze beigegeben werden.

Die erfindungsgemäßen Zweikomponenten-Bindemittel lassen sich zur Formulierung von Beschichtungsmitteln für Substrate wie Metall, Holz, Kunststoffe, mineralische Substrate wie Ton, Beton, unglasiertes Porzellan oder auch für Karton verwenden. Bevorzugt ist die Verwendung als Bindemittel für Klarlacke auf metallischen Substraten; in dieser Anwendung zeigen die Lackfilme, die mit den erfindungsgemäßen Bindemitteln formuliert werden, besonders gute Haftung.

Es ist auch möglich, einen Teil der blockierten Isocyanate durch wasserlösliche Melaminharze oder andere Aminoplastharze zu ersetzen, die unter Erwärmung mit den Hydroxylgruppen des Polyesters **AB** unter Vernetzung reagieren. Dabei läuft die Härtung beim Erwärmen in mehreren Stufen ab, wobei durch die bereits bei niedrigerer Temperatur einsetzende Härtung durch die Isocyanate ein Ablaufen des vorvernetzten Lackfilms an geneigten Flächen verhindert werden kann. Die Aminoplastharze, insbesondere Melaminharze, können der Polyesterkomponente oder vorzugsweise den blockierten Isocyanaten zugesetzt werden. In diesen Zusammensetzungen sind die Festkörper-Massenanteile in der Bindemittelmischung bevorzugt 60 bis 90 % für die Komponente **AB**, 10 bis 40 % für die blockierten Isocyanate **C** und 0 bis 15 % für die Aminoplastharz-Komponente.

### Beispiele

Die Beispiele erläutern die Erfindung, ohne sie in ihrem Umfang zu beschränken. In den nachfolgenden Beispielen bedeuten ebenso wie im vorhergehenden Text alle Angaben mit der Einheit "%" (= g/(100 g) oder cg/g) Massenanteile (Quotient der Masse des betreffenden Stoffes und der Masse der Mischung), soweit nicht anders angegeben. Konzentrationsangaben in "%" sind Massenanteile des gelösten Stoffes in der Lösung (Masse des gelösten Stoffes, dividiert durch die Masse der Lösung).

Die Säurezahl ist gemäß DIN 53 402 definiert als der Quotient derjenigen Masse *m*_{KOH} an Kaliumhydroxid, die erforderlich ist, um eine zu untersuchende Probe zu neutralisieren, und der Masse *m*_{B} dieser Probe (Masse des Feststoffes in der Probe bei Lösungen oder Dispersionen); ihre übliche Einheit ist "mg/g".

Die Hydroxylzahl ist gemäß DIN 53 240 definiert als der Quotient derjenigen Masse *m*_{KOH} an Kaliumhydroxid, die genausoviel Hydroxylgruppen aufweist wie eine zu untersuchende Probe, und der Masse *m*_{B} dieser Probe (Masse des Feststoffes in der Probe bei Lösungen oder Dispersionen); ihre übliche Einheit ist "mg/g".

Die Jodzahl ist gemäß DIN 53 241-1 definiert als der Quotient derjenigen Masse *m*_{I} an Jod, die unter Entfärbung an die olefinischen Doppelbindungen einer zu untersuchenden Probe addiert wird, und der Masse *m*_{B} dieser Probe (Masse des Feststoffes in der Probe bei Lösungen oder Dispersionen); ihre übliche Einheit ist "g/(100 g)" oder "cg/g".

Die früher so bezeichnete "Grenzviskositätszahl", nach DIN 1342, Teil 2.4, "Staudinger-Index" *J*_{g} genannt, ist der Grenzwert der Staudinger-Funktion *J*ᵥ bei abnehmender Konzentration und Schubspannung, wobei *J*ᵥ die auf die Massenkonzentration β_{B} = *m*_{B} / *V* des gelösten Stoffes B (mit der Masse *m* _{B} des Stoffes im Volumen *V* der Lösung) bezogene relative Viskositätsänderung ist, also *J*ᵥ = (ηᵣ-1) / β_{B}. Dabei bedeutet ηᵣ-1 die relative Viskositätsänderung, gemäß der Gleichung ηᵣ - 1 = (η - ηₛ) / ηₛ. Die relative Viskosität ηᵣ ist der Quotient aus der Viskosität η der untersuchten Lösung und der Viskosität ηₛ des reinen Lösungsmittels. (Die physikalische Bedeutung des Staudinger-Index ist die eines spezifischen hydrodynamischen Volumens des solvatisierten Polymerknäuels bei unendlicher Verdünnung und im Ruhezustand.) Die üblicherweise für *J* verwendete Einheit ist "cm³/g"; früher häufig "dl/g".

In den Beispielen werden folgende Abkürzungen verwendet:
- DGM: Diäthylenglykoldimethyläther
- MIBK: Methylisobutylketon
- HAC: Hydroxyaceton (molare Masse: 74 g/mol)
- ACA: Acetylaceton (molare Masse: 100 g/mol)
- ACE: Acetessigester (molare Masse: 130 g/mol)
- MDE: Malonsäurediäthylester (molare Masse: 160 g/mol)
- BO: 2-Butanonoxim (molare Masse: 87 g/mol)
- DMP: 3,5-Dimethylpyrazol (molare Masse: 96 g/mol)
- TMP: Trimethylolpropan (molare Masse: 134 g/mol)
- TDE: Triol, hergestellt durch Umsetzung von 1 mol Diäthanolamin mit 1 mol Äthylencarbonat (molare Masse: 193 g/mol)
- TDI: Toluylendiisocyanat (molare Masse: 174 g/mol); handelsübliches Isomerengemisch mit ca. 80 % 2,4-TDI und ca. 20 % 2,6-TDI
- MDI: Diphenylmethandiisocyanat (molare Masse: 250 g/mol)
- HDI: Hexamethylendiisocyanat (molare Masse: 168 g/mol)

Unter "einwandfrei wasserverdünnbar" oder "unbegrenzt wasserverdünnbar" wird hier verstanden, daß bei der allmählichen Zugabe von Wasser (bis zum ca. 10fachen der Masse der eingesetzten Harzlösung) zur Harzlösung unter Rühren keine Trübung oder Entmischung beobachtet wurde.

### Herstellung der Polycarboxylkomponenten

### Komponente AI:

In einem geeigneten Reaktionsgefäß wurde eine Lösung von 810 g (6 mol) Dimethylolpropionsäure in 946 g DGM und 526 g MIBK vorgelegt. Innerhalb von 4 Stunden wurde zu dieser Lösung bei 100 °C eine Mischung aus 870 g (5 mol) TDI und 528 g (2 mol) eines mit Äthylenglykolmonoäthyläther halbblockierten TDI zugegeben. Sobald alle NCO-Gruppen umgesetzt waren, wurde der Ansatz mit einer Mischung aus DGM und MIBK (2:1) auf einen Festkörper-Massenanteil von 60 % verdünnt. Die Komponente AI wies eine Säurezahl von 140 mg/g und einen Staudinger-Index *J*_{g} (" Grenzviskositätszahl"), gemessen in N,N-Dimethylformamid (DMF) bei 20 °C, von 9,3 cm³/g auf.

Das halbblockierte TDI wurde durch Zugabe von 90 g (1 mol) Äthylenglykolmonoäthyläther zu 174 g (1 mol) TDI innerhalb von 2 Stunden bei 30 °C und anschließender Reaktion bis zu einem Massenanteil an NCO-Gruppen von 16 bis 17 % hergestellt.

### Komponente AII:

In gleicher Weise wie bei A1 wurden 945 g (7 mol) Dimethylolpropionsäure gelöst in 1079 g DGM und 599 g MIBK mit 1044 g (6 mol) TDI und 528 g (2 mol) eines mit Äthylenglykolmonoäthyläther halbblockierten TDI reagiert. Die Komponente A2 wies einen Festkörper-Massenanteil von 60 %, eine Säurezahl von 140 mg/g und einen Staudinger-Index *J*_{g} ("Grenzviskositätszahl"), gemessen in N,N-Dimethylformamid (DMF) bei 20 °C, von 10,2 cm³/g auf.

### Herstellung der Polyhydroxylkomponenten

### Komponente BI:

In einem geeigneten Reaktionsgefäß wurden 130 g (1,1 mol) Hexandiol-1,6, 82 g (0,6 mol) Monopentaerythrit, 8 g (0,05 mol) Isononansäure, 28 g (0,1 mol) Ricinenfettsäure (dehydratisierte Rizinusölfettsäure) und 50 g (0,3 mol) Isophthalsäure bei 210 °C bis zu einer Säurezahl von weniger als 4 mg/g verestert. Die Viskosität einer 50 %igen Lösung in Äthylenglykolmonobutyläther, gemessen als Auslaufzeit nach DIN 53211 bei 20°C, beträgt 125 Sekunden, der Staudinger-Index *J*_{g} (" Grenzviskositätszahl"), gemessen in N,N-Dimethylformamid bei 20 °C, betrug 9,8 cm³/g.

### Komponente BII:

In gleicher Weise wie bei B1 wurden 38 g (0,2 mol) Tripropylenglykol, 125 g (1,2 mol) Neopentylglykol, 28 g (0,1 mol) isomerisierte Linolsäure, 83 g (0,5 mol) Isophthalsäure und 58 g (0,3 mol) Trimellithsäureanhydrid bei 230 °C bis zu einer Säurezahl von weniger als 4 mg/g verestert. Die Viskosität einer 50 %igen Lösung in Äthylenglykolmonobutyläther, gemessen als Auslaufzeit nach DIN 53211 bei 20 °C, betrug 165 Sekunden. Der Staudinger-Index *J*_{g} ("Grenzviskositätszahl"), gemessen in N,N-Dimethylformamid bei 20°C, betrug 10,5 cm³/g.

### Herstellung der wasserverdünnbaren Polyester AB:

Entsprechend den in Tabelle 1 angegebenen Mengenverhältnissen wurden die genannten Massen der Polycarboxylkomponente (A) und der Polyhydroxylkomponente (B) miteinander gemischt und das vorhandene Lösemittel während des Aufheizens auf die angegebene Reaktionstemperatur durch Destillation unter vermindertem Druck weitgehend entfernt. Diese Temperatur wurde gehalten, bis die gewünschte Säurezahl und Staudinger-Index gemäß der Angabe in der Tabelle 1 erreicht worden waren, wobei eine Probe nach Neutralisation mit Dimethyläthanolamin einwandfrei wasserverdünnbar war. Die Komponenten wurden gemäß den Beispielen AB I und AB II unmittelbar weiterverarbeitet.

**Tabelle 1**

| (alle Massenangaben beziehen sich auf Feststoff) | | | | | | | |
|---|---|---|---|---|---|---|---|
| Reaktionsprodukt | Komponente A | | Komponente B | | Reaktions temperatur ¹⁾ | Säurezahl | *J*_{g}²⁾ |
| | Masse in g | Typ | Masse in g | Typ | | mg/g | cm³/g |
| AB I | 35 | AI | 65 | BI | 150 bis 160 °C | 41 bis 45 | 16,7 |
| AB II | 30 | AII | 70 | BII | 150 bis 160 °C | 35 bis 39 | 16,0 |

| | | | | | | | |
|---|---|---|---|---|---|---|---|
| ¹⁾ Die Reaktion erfolgte in ca. 90 %iger Lösung im DGM | | | | | | | |
| ²⁾ Staudinger-Index, gemessen in N,N-Dimethylformamid (DMF) bei 20 °C | | | | | | | |

### Wasserverdünnbarer Polyester AB III:

In einen 3-Halskolben ausgestattet mit Rührer und Rückflußkühler wurden 140 g (1,3 mol) Diäthylenglykol und 152 g (1,1 mol) Trimethylolpropan eingewogen. Unter Rühren und Inertgas wurde die Mischung auf 100 °C erwärmt und bei dieser Temperatur portionsweise 109 g (0,6 mol) Isophthalsäure, 96 g (0,6 mol) Adipinsäure und zuletzt 198 g (1,3 mol) Phthalsäureanhydrid zugegeben. Unter Ausnutzung der auftretenden Exothermie wurde die Temperatur auf 130 °C erhöht. Nachdem bei 130 °C 2 Stunden gehalten wurde, wurde langsam auf 180 °C erwärmt und unter Abtrennung des jetzt anfallenden Reaktionswassers bis zu einer Säurezahl von 50 mg/g verestert. Nach Erreichen der genannten Säurezahl wurde mit Butylglykol auf einen Festkörper-Massenanteil von 60 % verdünnt und zuletzt durch Zugabe von 14 g (0,16 mol) N,N-Dimethyläthanolamin neutralisiert. Das so erhaltene Produkt war unbegrenzt wasserverdünnbar.

### Herstellung der Härterkomponenten

In einen 3-Halskolben ausgestattet mit Rührer und Rückflußkühler wurde eine Mischung aus (insgesamt) 1 mol der in der Tabelle 2 genannten Diisocyanate und ca. 85 g Methylisobutylketon vorgelegt. Der Mischung wurde unter Rühren bei Raumtemperatur 0,3 mol des genannten Triols (Trimethylolpropan bzw. N,N-Bishydroxyäthyl-2-hydroxyäthylurethan, erhältlich durch Umsetzen von Äthylencarbonat und Diäthanolamin) zugesetzt, anschließend wurde die Temperatur unter Ausnutzung der auftretenden Exothermie auf 50 °C gesteigert. Nachdem alles gelöst war, hielt man noch eine weitere Stunde bei 50 °C. Innerhalb von einer Stunde wurden dann 1,1 mol des Verkappungsmittels zugetropft, dabei stieg die Temperatur durch Exothermie auf 80 °C. Durch zeitweises Kühlen wurde bei dieser Temperatur so lange gehalten, bis keine Isocyanatgruppen mehr nachweisbar waren. Das Methylisobutylketon wurde anschließend unter vermindertem Druck abdestilliert, dann wurde der Ansatz mit Methoxypropanol auf einen Festkörper-Massenanteil von 60 bis 70 % verdünnt (siehe Tabelle 2).

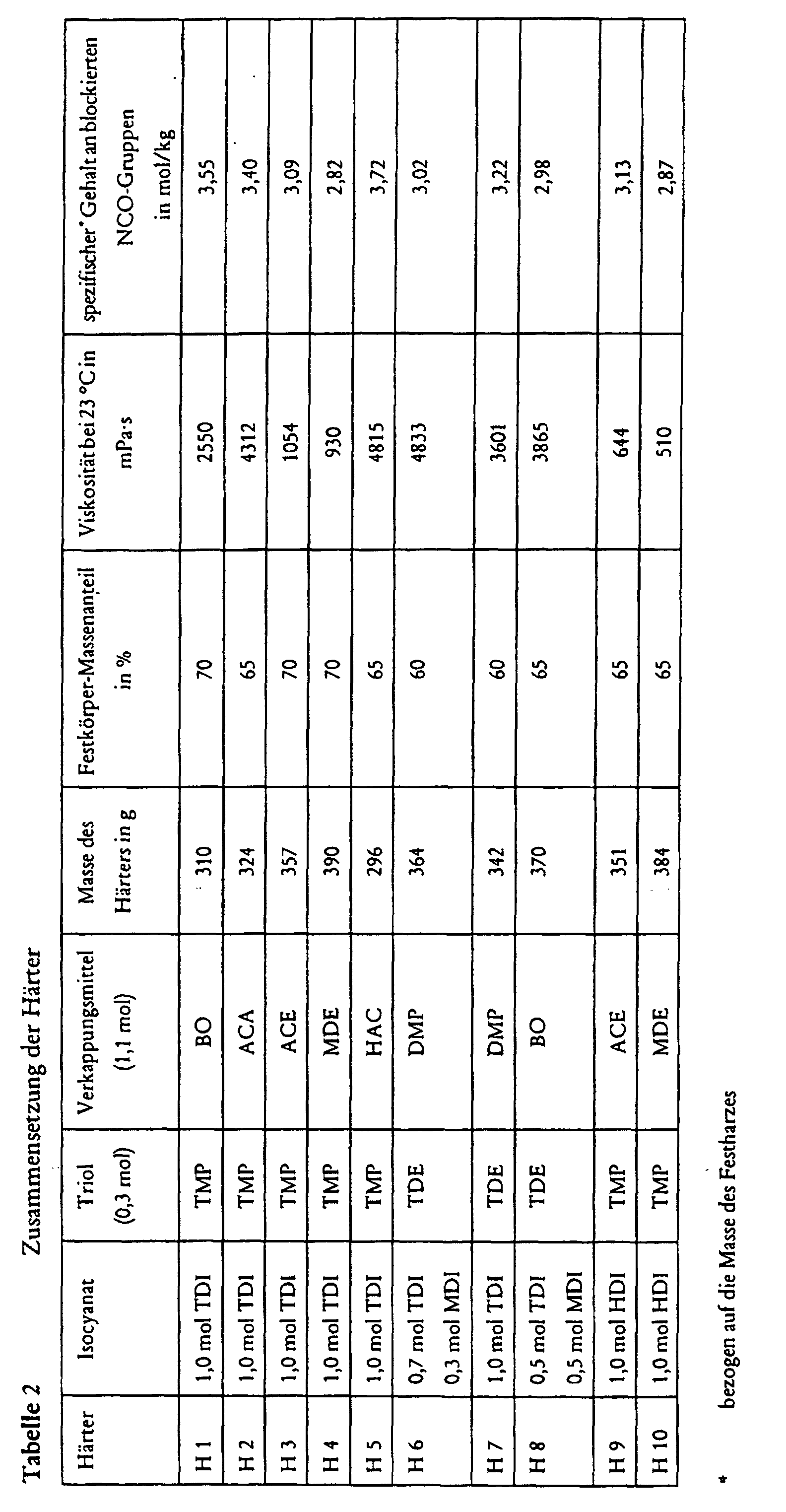

Aus den in Tabelle 2 angeführten Härtern H 1 bis H 10 wurden in Kombination mit den Polyesterharzen AB I, AB II sowie AB III unpigmentierte Klarlacke formuliert.

Dazu wurden die Polyesterharze bei 70 bis 100 °C mit Dimethyläthanolamin auf einen Neutralisationsgrad von 100 % eingestellt und anschließend mit deionisiertem Wasser auf eine Lieferformviskosität von etwa 100 mPa·s verdünnt. Unter gutem Rühren wurde dann der Härter langsam zugegeben, nach beendeter Zugabe wurde noch 5 min nachgerührt. Das Verhältnis der Massen von Polyester und Härter wurde in allen Fällen auf 70:30 (bezogen jeweils auf Festharz) eingestellt. Nach dem Einrühren wurde durch Zugabe von weiterem Wasser eine Viskosität im Bereich von 400 bis 600 mPa·s eingestellt.

Die erhaltenen Klarlacke wurden mit einem Aufziehwürfel auf kaltgewalztes Feinblech so aufgezogen, daß eine Trockenfilmstärke von ca. 20 µm resultierte. Die Ergebnisse der lacktechnischen Prüfung sind in der Tabelle 3 zusammengefaßt. Die Lacke zeigten gute Härte schon bei relativ niedrigen Einbrenntemperaturen.

**Tabelle 3**

| Ergebnisse der lacktechnischen Prüfungen | | | | | | | | | | | |
|---|---|---|---|---|---|---|---|---|---|---|---|
| Lack | L1 | L2 | L3 | L4 | L5 | L6 | L7 | L8 | L9 | L10 | L11 |
| Härter | H1 | H4 | H3 | H5 | H6 | H7 | H8 | H9 | H10 | H5 | H3 |
| Polyester | AB III | AB III | AB I | AB II | AB I | AB III | AB II | AB III | AB III | AB I | AB III |
| Schichtstärke (trocken) in µm | 18 | 20 | 20 | 19 | 21 | 22 | 19 | 20 | 18 | 20 | 20 |
| Einbrenntemperatur in °C | 110 | 110 | 110 | 110 | 110 | 110 | 110 | 110 | 110 | 110 | 110 |
| Gitterschnitt | Gt 0 | Gt 0 | Gt 0 | Gt 0 | Gt 1 | Gt 0 | Gt 1 | Gt 0 | Gt 0 | Gt 0 | Gt 0 |
| Pendelhärte (König) in s | 90 | 95 | 133 | 123 | 144 | 125 | 143 | 88 | 93 | 133 | 107 |

Dabei wird die Bewertung bei "Gitterschnitt" gemäß der Norm DIN 53 151 vorgenommen.

## Patentansprüche

1. Wäßrige Zweikomponenten-Bindemittel-Systeme, deren erste Komponente einen wasserverdünnbaren Polyester **AB** mit einer Hydroxylzahl von mindestens 10 mg/g enthält, und deren zweite Komponente ein blockiertes mehrfunktionelles Isocyanat **C** enthält, **dadurch gekennzeichnet, daß** das blockierte Isocyanat **C** durch Reaktion aus einem aromatischen Isocyanat **C1** und einem Blockierungsmittel **C2** für das Isocyanat hergestellt wird, wobei **C2** ausgewählt ist aus primären Alkoholen **C21** mit 3 bis 10 Kohlenstoffatomen, bei denen das der Hydroxymethylengruppe benachbarte Kohlenstoffatom eine Doppelbindung trägt, Oximen **C22** von linearen, verzweigten oder cyclischen aliphatischen Ketonen mit 3 bis 15 Kohlenstoffatomen, CH-aciden Verbindungen **C23**, bei denen das den aktiven Wasserstoff tragende C-Atom mindestens eine weitere Gruppe ausgewählt aus R¹-CO-, R²-O-CO-, -NO₂ und R³-SO₂- trägt, wobei R¹, R² und R³ unabhängig voneinander lineare, verzweigte oder cyclische Alkylgruppen mit 1 bis 18 Kohlenstoffatomen oder Arylgruppen mit 5 bis 15 Kohlenstoffatomen sein können, sowie NH-aciden Verbindungen **C24**.

2. Wäßrige Zweikomponenten-Bindemittel-Systeme nach Anspruch 1, **dadurch gekennzeichnet, daß** die wasserverdünnbaren Polyester **AB** durch Polykondensation von mehrfunktionellen, insbesondere difunktionellen organischen Hydroxyverbindungen **AB1** und mehrfunktionellen, insbesondere difunktionellen organischen Säuren **AB2** hergestellt werden

3. Wäßrige Zweikomponenten-Bindemittel-Systeme nach Anspruch 1, **dadurch gekennzeichnet, daß** die wasserverdünnbaren Polyester **AB** durch partielle Kondensation von für sich allein wasserunlöslichen Hydroxylgruppen-haltigen Verbindungen **B** mit Säuregruppen, insbesondere Carboxylgruppen enthaltenden organischen Verbindungen **A** dargestellt werden, wobei die Umsetzung der Verbindungen **A** und **B** soweit durchgeführt wird, daß das erhaltene Kondensationsprodukt **AB** noch sowohl Hydroxylgruppen als auch Säuregruppen aufweist.

4. Wäßrige Zweikomponenten-Bindemittel-Systeme nach Anspruch 1, **dadurch gekennzeichnet, daß** die Menge der Säuregruppen in **AB** einer Säurezahl von 10 bis 60 mg/g entspricht.

5. Wäßrige Zweikomponenten-Bindemittel-Systeme nach Anspruch 1, **dadurch gekennzeichnet, daß** die Menge der Hydroxylgruppen in **AB** einer Hydroxylzahl von mindestens 15 mg/g entspricht.

6. Wäßrige Zweikomponenten-Bindemittel-Systeme nach Anspruch 1, **dadurch gekennzeichnet, daß** das Polykondensat **AB** einen Staudinger-Index *J*_{g} von 5 bis 25 cm³/g aufweist.

7. Wäßrige Zweikomponenten-Bindemittel-Systeme nach Anspruch 3, **dadurch gekennzeichnet, daß** die Verbindungen **AB** für sich allein nach zumindest teilweiser Neutralisation der Säuregruppen in Wasser löslich bzw. in Wasser dispergierbar sind.

8. Wäßrige Zweikomponenten-Bindemittel-Systeme nach Anspruch 1, **dadurch gekennzeichnet, daß** als Blockierungsmittel C24 3,5-Dimethylpyrazol verwendet wird.

9. Wäßrige Lacke, die Zweikomponenten-Bindemittel-Systeme nach Anspruch 1 enthalten.

10. Wäßrige Lacke nach Anspruch 9, die zusätzlich wasserlösliche Aminoplastharze als zusätzliche Härterkomponente enthalten.

## Claims

1. An aqueous two-component binder system whose first component comprises a water-dilutable polyester **AB** having a hydroxyl number of at least 10 mg/g and whose second component comprises a blocked polyfunctional isocyanate C, wherein the blocked isocyanate **C** is prepared by reaction of an aromatic isocyanate **C1** and a blocking agent **C2** for the isocyanate, **C2** being selected from primary alcohols **C21** having 3 to 10 carbon atoms, in which the carbon atom adjacent to the hydroxymethylene group carries a double bond, oximes **C22** of linear, branched or cyclic aliphatic ketones having 3 to 15 carbon atoms, CH-acidic compounds **C23,** in which the carbon atom which carries the active hydrogen carries at least one further group selected from R¹-CO-, R²-O-CO-, -NO₂ and R³-SO₂-, R¹, R² and R³ independently of one another being able to be linear, branched or cyclic alkyl groups having 1 to 18 carbon atoms or aryl groups having 5 to 15 carbon atoms, and NH-acidic compounds **C24**.

2. The aqueous two-component binder system as claimed in claim 1, wherein the water-dilutable polyesters **AB** are prepared by polycondensation of polyfunctional, especially difunctional, organic hydroxy compounds **AB1** and polyfunctional, especially difunctional, organic acids **AB2**.

3. The aqueous two-component binder system as claimed in claim 1, wherein the water-dilutable polyesters **AB** are prepared by partial condensation of hydroxyl-containing compounds **B** which per se are insoluble in water with organic compounds **A** containing acid groups, especially carboxyl groups, the reaction of the compounds **A** and **B** being conducted to a point where the resulting condensation product **AB** still contains both hydroxyl groups and acid groups.

4. The aqueous two-component binder system as claimed in claim 1, wherein the amount of the acid groups in **AB** corresponds to an acid number of from 10 to 60 mg/g.

5. The aqueous two-component binder system as claimed in claim 1, wherein the amount of the hydroxyl groups in **AB** corresponds to a hydroxyl number of at least 15 mg/g.

6. The aqueous two-component binder system as claimed in claim 1, wherein the polycondensate **AB** has a Staudinger index ***J***₀ of from 5 to 25 cm³/g.

7. The aqueous two-component binder system as claimed in claim 3, wherein the compounds **AB** are per se dispersible in water or soluble in water following at least partial neutralization of the acid groups.

8. The aqueous two-component binder system as claimed in claim 1, wherein 3,5-dimethylpyrazole is used as blocking agent **C24**.

9. An aqueous coating material which comprises a two-component binder system as claimed in claim 1.

10. The aqueous coating material as claimed in claim 9, further comprising water-soluble amino resins as an additional curative component.

## Revendications

1. Systèmes de liants aqueux à deux composants, dont le premier composant contient un polyester AB diluable à l'eau ayant un indice d'hydroxyle d'au moins 10 mg/g, et dont le deuxième composant contient un isocyanate multifonctionnel bloqué C, **caractérisés en ce que** l'isocyanate bloqué C est préparé par réaction à partir d'un isocyanate aromatique C1 et d'un agent de blocage C2 de l'isocyanate, C2 étant choisi parmi les alcools primaires C21 ayant de 3 à 10 atomes de carbone, l'atome de carbone voisin du groupe hydroxyméthyle portant une double liaison, les oximes C22 de cétones aliphatiques cycliques ou à chaîne linéaire ou ramifiée ayant de 3 à 15 atomes de carbone, les composés CH-acides C23 dans lesquels l'atome de carbone portant l'hydrogène actif porte au moins un autre groupe choisi parmi R¹-CO-, R²-O-CO-, -NO₂ et R³-SO₂-, où R¹, R² et R³ peuvent, chacun indépendamment des autres, être un groupe alkyle cyclique ou à chaîne linéaire ou ramifiée ayant de 1 à 18 atomes de carbone ou un groupe aryle ayant de 5 à 15 atomes de carbone, ainsi que les composés NH-acides C24.

2. Systèmes de liants aqueux à deux composants selon la revendication 1, **caractérisés en ce que** les polyesters AB diluables à l'eau sont préparés par polycondensation de composés hydroxylés organiques multifonctionnels, en particulier bifonctionnels AB1, et d'acides organiques AB2 multifonctionnels, en particulier bifonctionnels.

3. Systèmes de liants aqueux à deux composants selon la revendication 1, **caractérisés en ce que** les polyesters diluables à l'eau AB sont préparés par condensation partielle de composés B insolubles dans l'eau par eux-mêmes, et contenant des groupes hydroxyle, avec des groupes acides, en particulier des composés organiques A contenant des groupes carboxyle, la réaction des composés A et B étant mise en oeuvre jusqu'à ce que le produit de condensation AB ainsi obtenu comporte encore tant des groupes hydroxyle que des groupes acides.

4. Systèmes de liants aqueux à deux composants selon la revendication 1, **caractérisés en ce que** la quantité des groupes acides dans AB correspond à un indice d'acide de 10 à 60 mg/g.

5. Systèmes de liants aqueux à deux composants selon la revendication 1, **caractérisés en ce que** la quantité des groupes hydroxyle dans AB correspond à un indice d'hydroxyle d'au moins 15 mg/g.

6. Systèmes de liants aqueux à deux composants selon la revendication 1, **caractérisés en ce que** le produit de polycondensation AB présente un indice de Staudinger J_{g} de 5 à 25 cm³/g.

7. Systèmes de liants aqueux à deux composants selon la revendication 3, **caractérisés en ce que** les composants AB, par eux-mêmes, peuvent, après une neutralisation au moins partielle des groupes acides, être solubles ou dispersibles dans l'eau.

8. Systèmes de liants aqueux à deux composants selon la revendication 1, **caractérisés en ce qu'**on utilise en tant qu'agent de blocage C24 le 3,5-diméthylpyrazole.

9. Peintures et vernis à l'eau, qui contiennent les systèmes de liants à deux composants selon la revendication 1.

10. Peintures et vernis à l'eau selon la revendication 9, qui en outre contiennent en tant que composants durcisseurs supplémentaires des résines aminoplastes solubles dans l'eau.
